# EUROPÄISCHE PATENTANMELDUNG

(11) **EP 0 889 001 A2**
(43) Veröffentlichungstag der Anmeldung: **07.01.1999**
(21) Anmeldenummer: 98112277.3
(22) Anmeldetag: 02.07.1998
(51) Int. Cl.: B66F 9/075, B60K 11/02, B60K 1/00

(54) **Gabelstapler mit einem Gegengewicht und einer Flüssigkeitskühling und Verfahren zur Herstellung eines als Wärmetauscher ausgebildeten Gegengewichts**

(30) Priorität: 04.07.1997 DE 19728710
(71) Anmelder: FIAT OM CARRELLI ELEVATORI S.p.A., 20141 Milano (IT); STILL GMBH, D-22113 Hamburg (DE)
(72) Erfinder: Fromme, Georg, Dr.-Ing., 21217 Seevetal 2 (DE); Mittmann, Hans-Georg, Dipl.-Ing., 21465 Wentorf (DE); Parente, Sante, 70042 Mola di Bari (IT)
(74) Vertreter: Kasseckert, Rainer

(57) **Zusammenfassung**

Gegenstand der Erfindung ist ein Gabelstapler mit einem an einem Rahmen angeordneten Gegengewicht (5) und mindestens einem eine Flüssigkeitskühlung aufweisenden Antriebssystem, wobei eine Kühlflüssigkeit die Verlustenergie des Antriebssystem aufnimmt und einem Wärmetauscher zuführt. Der Wärmetauscher (13) des Kühlsystems ist in dem Gegengewicht (5) integriert. Das Gegengewicht (5) weist beispielsweise einen Hohlraum (30) auf, der an die Kühlflüssigkeitsleitung (14) angeschlossen ist.

## Beschreibung

Die Erfindung betrifft einen Gabelstapler mit einem an einem Rahmen angeordneten Gegengewicht und mindestens einem eine Flüssigkeitskühlung aufweisenden Antriebssystem, wobei eine Kühlflüssigkeit die Verlustenergie des Antriebssystem aufnimmt und einem Wärmetauscher zuführt. Die Erfindung betrifft weiterhin ein Verfahren zur Herstellung eines in einem Gegengewicht eines eine Flüssigkeitskühlung aufweisenden Gabelstaplers integrierten Wärmetauschers.

Gabelstapler weisen Antriebssysteme für den Fahrantrieb, die Arbeitshydraulik und gegebenenfalls eine Lenkungshydraulik auf. Dabei werden elektrische oder verbrennungsmotorische Antriebssysteme eingesetzt. Bei verbrennungsmotorischen Antriebssystemen ist ein Verbrennungsmotor vorgesehen, der beispielsweise die hydraulische Pumpe eines hydrostatischen Fahrantriebs, den Drehmomentwandler eines hydrodynamischen Fahrantriebs oder das Getriebe eines mechanischen Fahrantriebs sowie die hydraulische Pumpe der Arbeitshydraulik sowie der Lenkungshydraulik antriebt. Zur Speisung eines Elektromotors eines elektrischen Antriebssystems kann eine Batterie vorgesehen werden. Zudem ist es bekannt, einen von einem Verbrennungsmotor angetriebenen elektrischer Generator zur Energieversorgung eines elektrischen Antriebssystems zu verwenden. Ein elektrisches Antriebssystem besteht in der Regel aus mindestens einem Antriebsmotor und gegebenenfalls einem elektronischen Leistungsstellglied, das zur Anpassung des Antriebsmotors an die jeweiligen Betriebsbedingungen vorgesehen ist. Als Antriebsmotoren können Gleichstrommotoren oder Drehstrommotoren eingesetzt werden. Bei Verwendung eines Drehstrommotors ist das elektronische Leistungsstellglied von einem Umrichter gebildet.

Verbrennungsmotorisch und elektrisch betriebene Antriebssysteme weisen einen begrenzten Wirkungsgrad auf. Bei der Energieumwandlung wird daher ein Teil der von den Aggregaten des Antriebssystems aufgenommenen Energie als Vertustenergie in Form von Wärme freigesetzt. Zur Abfuhrung dieser anfallenden Wärmemenge ist ein Kühlsystem notwendig, das die Wärme an die Umgebungsluft abgibt.

Hierzu ist es bekannt, eine Flüssigkeitskühlung des Antriebssystems vorzusehen. Die Wärmeabgabe des Kühlsystems an die Umgebung erfolgt hierbei mittels eines Wärmetauschers. In diesem wird die erwärmte Kühlflüssigkeit abgekühlt. Die zu kühlenden Aggregate des Antriebssystems sind mit dem Wärmetauscher in einem geschlossenen Kreislauf über Rohrleitungen verbunden. Zur Umwälzung der Kühlflüssigkeit ist eine Pumpe vorgesehen, die die Kühlflüssigkeit einem Wärmetauscher im Aggregateraum des Gabelstaplers zuführt. Aufgrund der begrenzten Bauraumverhältnisse bei einem Gabelstapler kann der Wärmetauscher nur eine begrenzte Fläche aufweisen. Um dennoch eine ausreichende Kühlwirkung zu erzielen, ist es notwendig, an dem Wärmetauscher eine Zwangsbelüftung, beispielsweise mittels eines Gebläses, vorzusehen, wodurch wiederum wertvoller Bauraum beansprucht wird. Derartige Flüssigkeitskühlungen in einem Gabelstapler mit einem elektrischen oder verbrennungsmotorischen Antriebssystem weisen folglich einen hohen Herstellaufwand und Platzbedarf auf.

Der vorliegenden Erfindung liegt die Aufgabe zugrunde, einen Gabelstapler der eingangs genannten Gattung zur Verfügung zu stellen, bei dem das Flüssigkeitskühlsystem einen geringen Herstellaufwand aufweist. Darüber hinaus soll ein geeignetes Verfahren zur Herstellung eines Wärmetauschers aufgezeigt werden.

Diese Aufgabe wird bezüglich eines Gabelstaplers erfindungsgemäß dadurch gelöst, daß der Wärmetauscher in das Gegengewicht integriert ist. Durch die Integration eines Wärmetauschers in das Gegengewicht des Gabelstaplers und somit einer zusätzlichen Verwendung des Gegengewichts als Wärmetauscher kann die Baugröße eines im Aggregateraum angeordneten Wärmetauschers verkleinert werden oder bei einer entsprechenden Wärmeübertragungsleistung des Gegengewichts auf einen im Aggregateraum des Gabelstapler angeordneten Wärmetauscher verzichtet werden. Dadurch benötigt das Kühlsystem weniger Bauraum, da der Wärmetauscher im Gegengewicht angeordnet und nicht im Aggregateraum des Gabelstaplers untergebracht ist.

Aufgrund der großen Oberfläche des Gegengewichts kann die Wärmeaufnahme von der Kühlflüssigkeit und die Wärmeabgabe an die Umgebungsluft über Konvektion erfolgen. Dadurch kann auf eine Zwangsbelüftung mittels eines Gebläses bei der Verwendung des Gegengewichts als Wärmetauscher verzichtet werden. Ein weiterer Vorteil ergibt sich dadurch, daß das Gegengewicht aufgrund der großen Masse einen Energiezwischenspeicher darstellt. Das Gegengewicht nimmt hierbei Energiespitzen ohne eine merkliche Temperaturerhöhung auf und gibt diese Energie zu einem späteren Zeitpunkt, in dem weniger Verlustenergie aufgenommen werden muß, an die Umgebung ab. Die Komponenten des Antriebssystems können somit stets ausreichend gekühlt werden. Dadurch stabilisiert sich deren Betriebstemperatur während des Betriebs des Gabelstaplers.

Hierbei kann ein spezieller Wärmetauscher mit einer geeigneten wärmetechnischen Anbindung mit dem Gegengewicht in Verbindung stehen. In einer besonders vorteilhaften Ausführungsform ist das Gegengewicht als Wärmetauscher ausgebildet. Die Kühlflüssigkeit durchströmt hierbei das Gegengewicht und gibt die in der Kuhlflüssigkeit enthaltene Wärme direkt an das Gegengewicht ab. Für die Erzeugung der Wärmetauscherfunktion des Gegengewichts kann hierbei auf einen speziellen Wärmetauscher verzichtet werden, wodurch sich ein geringer Herstellaufwand ergibt.

In einer Ausgestaltungsform weist das Gegengewicht mindestens einen von der Kühlflüssigkeit durchströmten Hohlraum auf. Der Wärmeaustausch zwischen der Kühlflüssigkeit und dem Gegengewicht findet hierbei in dem Hohlraum im Inneren des Gegengewicht statt. Das Gegengewicht verfügt in der Regel über ein großes Volumen, in das mit geringem Aufwand ein Hohlraum für die Wärmetauscherfunktion erzeugt werden können. Ein derartiges, als Wärmetauscher ausgebildetes Gegengewicht weist einen geringen Herstellaufwand auf, da ein Hohlraum für die Wärmetauscherfunktion auf einfache Weise im Gegengewicht hergestellt werden kann.

Mit besonderem Vorteil ist der Hohlraum als ein von der Kühlflüssigkeit durchströmtes Rohrsystem ausgebildet. Die Kühlflüssigkeit durchströmt hierbei das Rohrsystem und gibt die Verlustenergie an das Gegengewicht ab. Ein Rohrsystem stellt hierbei eine einfache Möglichkeit dar, im Gegengewicht einen Raum für die Wärmetauscherfunktion zu erzeugen.

Besonders zweckmäßig ist es, wenn das Rohrsystem als Rohrschlange ausgebildet ist. Eine Rohrschlange stellt eine große Oberfläche zum Wärmeaustausch zur Verfügung. Die Rohrschlange kann hierbei derart ausgestaltet werden, daß die Rohrschlange das Gegengewicht möglichst gleichmäßig durchsetzt und somit das Gegengewicht gleichmäßig von der Kühlflüssigkeit durchströmt wird. Dadurch wird erreicht, daß alle Bereiche des Gegengewichts mit der Kühlflüssigkeit in Verbindung gelangen und eine große Oberfläche für den Wärmeaustausch zur Verfügung steht.

In einer weiteren Ausgestaltungsform der Erfindung ist im Gegengewicht ein zur Oberfläche des Gegengewichts geöffneter Raum vorgesehen, der mittels einer Platte verschließbar ist. Dadurch ist es möglich, einen abgeschlossenen Raum zur Verfügung zu stellen, in den ein Wärmetauscher eingebaut werden kann. Ein derartiger Raum ist auf einfache Weise im Inneren des Gegengewichts herstellbar und mittels einer Platte verschließbar.

Besonders vorteilhaft ist es hierbei, wenn an der Platte eine Dichtung und Anschlüsse zur Aufnahme einer Kühlflüssigkeitsleitung vorgesehen sind. Durch die Platte und die darin integrierten Anschlüsse für die Kühlflüssigkeitsleitung wird ein abgeschlossener Raum erzeugt, der direkt von der Kühlflüssigkeit durchströmt ist.

Bei einem Gabelstapler, bei dem zur Umwälzung der Kühlflüssigkeit eine Pumpe vorgesehen ist, ist es besonders vorteilhaft, wenn die Pumpe im Gegengewicht angeordnet ist. Dadurch kann der Bauraumbedarf im Aggregateraum des Gabelstaplers für das Flüssigkeitskühlsystem weiter verringert werden.

Von besonderem Vorteil ist ein Befüllungssystem und ein Entlüftungssystem im Gegengewicht angeordnet. Dadurch sind die wesentlichen Komponenten des Kühlsystem im Gegengewicht angeordnet.

Zweckmäßigerweise ist das Befüllungs- und Entlüftungssystem als Expansionsbehälter mit einer mittels eines Verschlußstopfens verschließbaren Öffnung ausgebildet. Ein derartiger Expansionsbehälter erlaubt die Befüllung des Kühlkreislaufes, den thermischen Ausgleich der Kühlflüssigkeit während des Betriebs und eine Kontrolle des Flüssigkeitsstandes der Kühlflüssigkeit.

Mit besonderem Vorteil ist im Expansionsbehälter ein Sensor zur Erfassung der Kühlflüssigkeitsmenge vorgesehen. Durch den Sensor kann beispielsweise bei einem Flüssigkeitsmangel ein Signal abgegeben und eine entsprechende Kontrolleuchte aktiviert werden.

Besonders vorteilhaft ist es, wenn als Kühlflüssigkeit das Druckmittel der hydraulischen Anlage des Gabelstaplers vorgesehen ist. Die Flüssigkeitskühlung ist hierbei mit der hydraulischen Anlage des Gabelstaplers kombiniert, indem das Druckmittel, d.h. die Hydraulikflüssigkeit, als Kühlflüssigkeit verwendet wird. Es ist somit keine eigene Kühlflüssigkeit notwendig. Zudem dient das Wärmetauschervolumen im Gegengewicht gleichzeitig als Vorratstank für die Hydraulikflüssigkeit, wobei auf einen bisher üblichen Vorratsbehälter verzichtet werden kann.

Zur Umwälzung der als Kühlflüssigkeit verwendeten Hydraulikflüssigkeit kann eine separate Pumpe verwendet werden. Besondere Vorteile ergeben sich jedoch, wenn die Hydraulikpumpe der hydraulischen Anlage, insbesondere die Lenkungspumpe zur Umwälzung der Kühlflüssigkeit ausgebildet ist. Die Lenkungspumpe einer hydraulischen Lenkunterstützung dient hierbei gleichzeitig zur Umwälzung der als Kühlflüssigkeit verwendeten Hydraulikflüssigkeit. Es wird somit mit geringem Aufwand eine Flüssigkeitskühlung zur Verfügung gestellt.

Die Erfindung kann bei einem Gabelstapler mit einem verbrennungsmotorischen Antriebssystem beispielsweise zur Kühlung des Verbrennungsmotors eingesetzt werden. Als Kühlflüssigkeit kann das Kühlwasser des Verbrennungsmotors verwendet werden.

Besonders vorteilhaft ist es, wenn das Antriebssystem als ein elektrisches Antriebssystem ausgebildet ist. Bei einem flüssigkeitsgekühlten, elektrischen Antriebssystem kann die Betriebstemperatur der elektrischen Aggregate gegenüber einem Antriebssystem mit einer Luftkühlung stabilisiert werden, wodurch der Betrieb der elektrischen Aggregate in einem engen Temperaturbereich ermöglicht wird und somit die elektrischen Aggregate nicht mehr hohen thermischen Schwankungen ausgesetzt sind.

Von besonderem Vorteil ist zur Speisung des elektrischen Antriebssystems eine Batterie vorgesehen. Bei einem Gabelstapler mit einem batteriebetrieben, elektrischen Antriebssystem steht im Aggregateraum des Gabelstaplers bedingt durch die Anordnung der Batterie wenig Bauraum zur Verfügung. Die während des Betriebs eines derartigen batteriebetriebenen, elektrischen Antriebssystems entstehende Verlustenergie kann durch die Verwendung des Gegengewichts als Wärmetauscher eines Flüssigkeitskühlsystems auf einfache Weise und mit einem geringen Herstellaufwand an die Umgebung abgegeben werden.

In einer zweckmäßigen Ausgestaltung weist das elektrische Antriebssystem mindestens einen Gleichstrommotor und ein Leistungsstellglied auf. Der Gleichstrommotor, der beispielsweise dem Fahrantrieb zugeordnet ist, und gegebenfalls das Leistungsstellglied, beispielsweise eine Impulssteuerung kann hierbei von der Kühlflüssigkeit durchströmt werden, wobei die von dem Antreibssystem abgegebene Verlustenergie in dem als Wärmetauscher ausgebildeten Gegengewicht zur Umgebung abgeben wird.

In einer vorteilhaften Ausgestaltung der Erfindung weist das elektrische Antriebssystem mindestens einen Drehstrommotor und einen Umrichter auf. Die Kühlung einer Drehstrommaschine kann über die Oberfläche der Maschine erfolgen. Aus diesem Grund erweist sich für Drehstrommaschinen eine Flüssigkeitskühlung als besonders zweckmäßig. Der bei der Verwendung eines Drehstrommotors erforderliche Umrichter kann hierbei ebenfalls mittels einer Flüssigkeitskühlung gekühlt werden und somit die bei der Umrichtung von Gleichstrom in Drehstrom, oder umgekehrt, anfallenden Verlustleistungen auf einfache Weise abgeführt werden.

Bezüglich eines Verfahrens zur Herstellung eines Wärmetauschers, der in einem Gegengewicht eines eine Flüssigkeitskühlung aufweisenden Gabelstaplers integriert ist, wird die der Erfindung zugrundeliegende Aufgabe dadurch gelöst, daß das Gegengewicht durch Gießen von flüssigen Metall in eine Gießform hergestellt wird und während des Gießens im Gegengewicht mindestens ein Raum für die Wärmetauscherfunktion erzeugt wird. Der Raum für die Wärmetauscherfunktion wird somit während der Herstellung des Gegengewichts erzeugt. Es sind somit keine gesonderten spanenden Arbeitsgänge zur Erzeugung des Hohlraums notwendig.

Zweckmäßigerweise wird der Raum durch Einlegen eines Kerns in die Gießform des Gegengewichts erzeugt. Der Raum für die Wärmetauscherfunktion wird dadurch auf einfache Weise hergestellt.

Besondere Vorteile ergeben sich, wenn als Kern ein Rohrsystem verwendet wird. In die Gießform des Gegengewichts wird hierbei ein Rohrsystem eingelegt, das im Betrieb des Gabelstaplers zum Umlauf der Kühlflüssigkeit vorgesehen ist. Hierdurch können beliebig komplexe Strukturen im Gegengewicht auf einfache Weise erzeugt werden. Darüber hinaus entfällt eine beim Gießen in der Regel erforderliche Nachbearbeitung von eingegossenen Kanälen.

Um das Erfordernis einer Abdichtung eines zur Oberfläche des Gegengewichts offenen Raums mittels einer Platte zu vermeiden, ist es vorteilhaft, wenn als Kern ein verlorener Kern verwendet wird. Dadurch wird im Gegengewicht ein Hohlraum erzeugt, der im Betrieb des Gabelstaplers von der Kühlflüssigkeit durchströmt wird.

Weitere Vorteile und Einzelheiten der Erfindung werden anhand der in den schematischen Figuren beschriebenen Ausführungsbeispiele näher erläutert. Dabei zeigt
- Figur 1: eine Seitenansicht eines Gabelstaplers,
- Figur 2: ein Flüssigkeitskühlsystem mit einem erfindungsgemäßen Gegengewicht,
- Figur 3: eine Ausführungform eines Gegengewichts in einem Flüssigkeitskühlssystem gemäß der Figur 2 und
- Figur 4: eine weitere Ausführungsform eines erfindungsgemäßen Gegengewichts in einem Flüssigkeitskühlssystem gemäß der Figur 2.

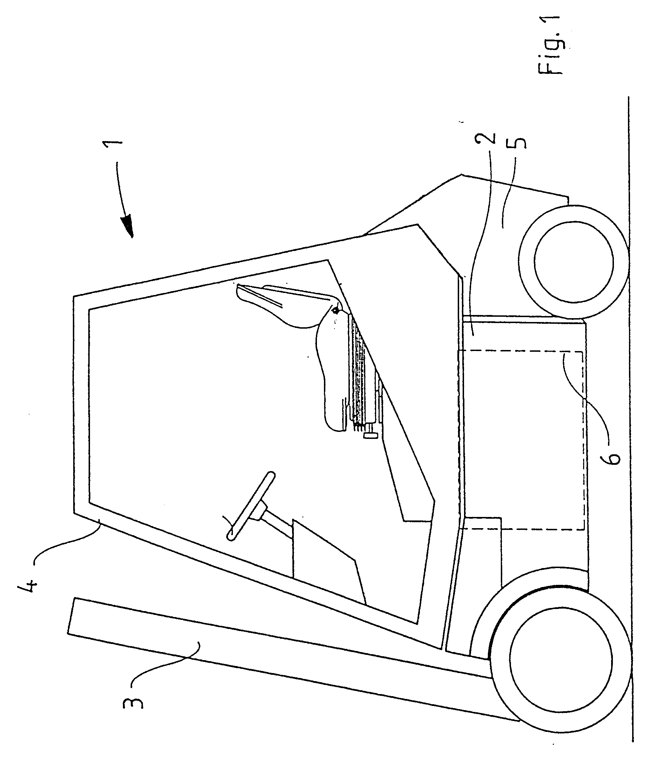

Der in Figur 1 stark schematisch dargestellte Gabelstapler 1 weist einen Rahmen 2 auf, an dem ein Hubgerüst 3 und ein Fahrerschutzdach 4 befestigt sind. An einem dem Hubgerüst 3 gegenüberliegenden Bereich des Rahmens 2 ist ein Gegengewicht 5 befestigt. Innerhalb des Rahmens 2 ist ein Aggregateraum vorgesehen, in dem beispielsweise eine gestrichelt dargestellte Batterie 6 angeordnet ist, die den in der Figur 1 nicht dargestellten Elektromotor eines elektrischen Antriebssysteme speist. Es ist ebenfalls eine Anordnung möglich, bei der innerhalb des Rahmens 2 ein Verbrennungsmotor angeordnet ist, der elektrische und / oder hydraulische und / oder mechanische Antriebssysteme mit Energie versorgt.

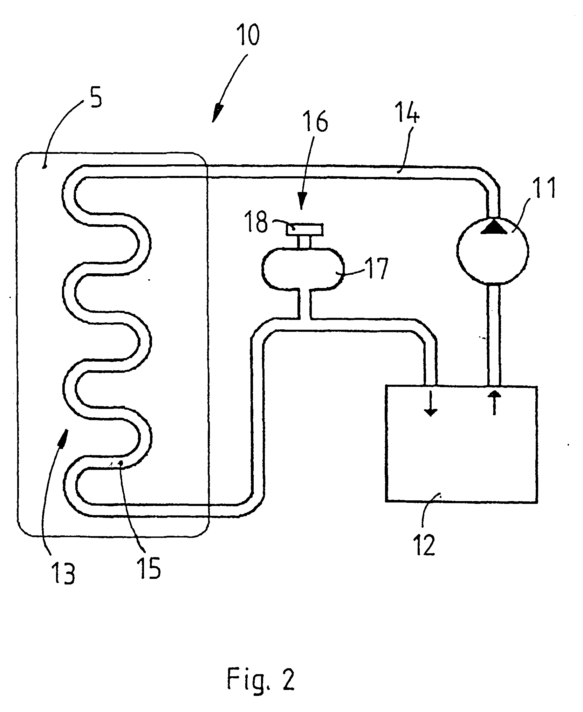

Die Figur 2 zeigt den schematischen Aufbau eines Flüssigkeitskühlsystems 10 für ein Antriebssystem 12. Das Antriebssystem 12 besteht bei einer Ausgestaltung als verbrennungsmotorisches Antriebssystem beispielsweise aus einem Verbrennungsmotor und mindestens einer hydraulischen Pumpe. Ein elektrisches Antriebssystem kann aus einem elektrischen Motor und gegebenenfalls einem Leistungsstellglied bestehen, wobei zur Energieversorgung ein von einem Verbrennungsmotor angetriebener Generator oder einer Batterie vorgesehen werden kann. Ein derartiges Kühlsystem 10 weist eine Pumpe 11 auf, die eine Kühlflüssigkeit in Umlauf zwischen dem Antriebssystem 12 und einem Wärmetauscher 13 bringt. Das Antriebssystem 12 ist mit dem Wärmetauscher 13 mittels einer Rohrleitung 14 verbunden. Es ist somit ein geschlossenes Kühlsystem gebildet, in dem die Kühlflüssigkeit mittels einer Pumpe 11 in der Kühlflüssigkeitsleitung 14 umgewälzt wird. Hierbei kann als Pumpe die Hydraulikpumpe der Lenkungshydraulik verwendet werden. Die Hydraulikflüssigkeit der Lenkungshydraulik wird somit gleichzeitig als Kühlflüssigkeit der Flüssigkeitskühlung verwendet. Das im Wärmetauscher befindliche Volumen der Hydraulikflüssigkeit dient hierbei gleichzeitig als Vorratstank.

Der Wärmetauscher 13 ist erfindungsgemäß in das Gegengewicht 5 integriert, wobei dieses als Wärmetauscher ausgebildet ist. Der Wärmetauscher besteht hierbei aus einem Rohrsystem, das im Gegengewicht 5 angeordnet ist. Das Rohrsystem ist beispielsweise als Rohrschlange 15 ausgebildet. Die Rohrschlange 15 besteht hierbei aus einem metallischen Werkstoff, der in die Gießform des Gegengewichts als Kern eingelegt wird.

Weiterhin ist ein Befüllungs- und Entlüftungssystem 16 vorgesehen, das ein Befüllen des Kühlflüssigkeitskreislaufs, den thermischen Ausgleich während des Betriebs und die Kontrolle der Kühlflüssigkeitsmenge ermöglicht. Das Befüllungs- und Entlüftungssystem 16 wird von einem Expansionsbehälter 17 gebildet, der beispielsweise aus durchsichtigem Material besteht und mittels eines Verschlußstopfens 18 verschließbar ist.

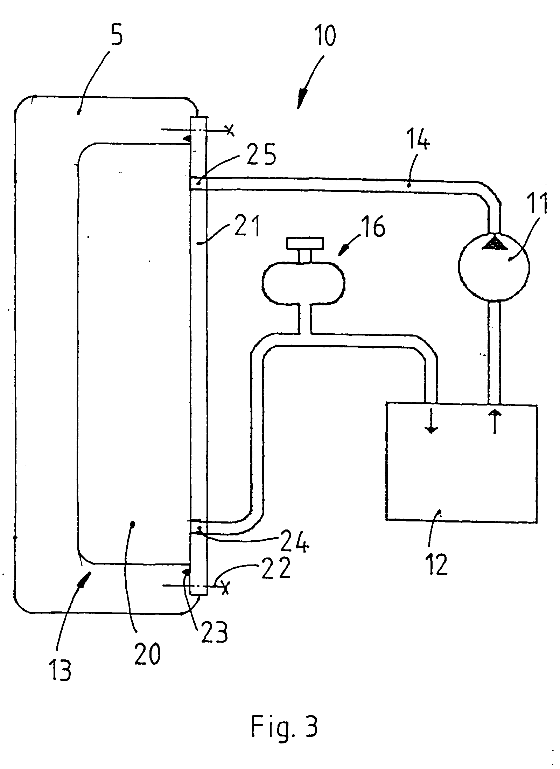

Der Wärmetauscher 13 des in der Figur 3 dargestellten Flüssigkeitskühlsystems 10 besteht aus einem Raum 20, der im Gegengewicht 5 vorgesehen ist und zur Oberfläche des Gegengewichts 5 geöffnet ist. Die Öffnung im Gegengewicht 5 ist mittels einer Platte 21 verschließbar. Hierzu können mehrere Schraubverbindungen 22 vorgesehen werden. Zur Abdichtung des Raumes 20 ist eine Dichtung 23 vorgesehen, die zwischen dem Gegengewicht 5 und der Platte 21 angeordnet ist. An der Platte 21 sind weiterhin Rohranschlüsse 24, 25 für die Kühlflüssigkeitsleitung 14 vorgesehen. Die Kühlflüssigkeit durchströmt somit den Raum und wird abgekühlt. Der Raum 20 kann hierbei auf einfache Weise durch das Einlegen eines Kern in die Gießform des Gegengewichts 5 erzeugt werden.

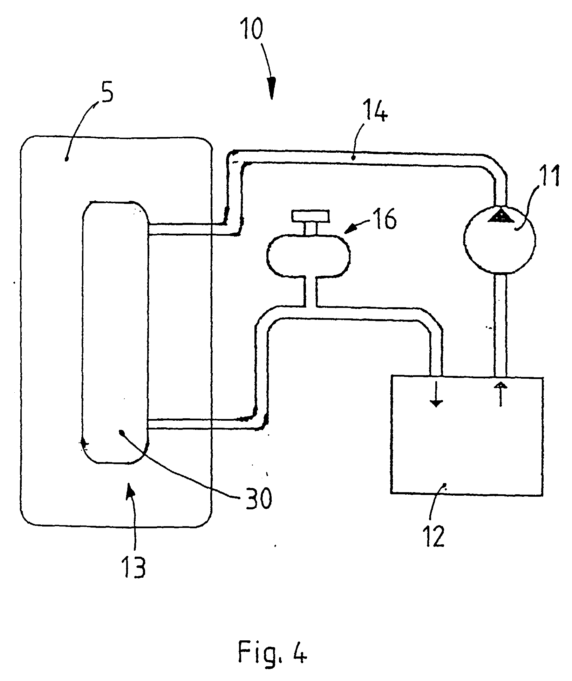

Eine weitere Ausführungsform eines im Gegengewicht 5 integrierten Wärmetauschers 13 zeigt die Figur 4. Im Gegengewicht 5 ist hierbei ein Hohlraum 30 vorgesehen, der an die Kühlflüssigkeitsleitung 14 angeschlossen ist und somit von der Kühlflüssigkeit durchströmt wird. Der Hohlraum 30 im Inneren des Gegengewichts 5 kann auf einfache Weise beispielsweise durch Verwendung eines verlorenen Kerns während des Gießens des Gegengewichts 5 erzeugt werden. Für die Wärmetauscherfunktion des Gegengewichts sind hierbei keine zusätzlichen Bauteile notwendig.

Im Betrieb des Gabelstaplers wird die Verlustenergie des zu kühlenden Antriebssystems 12 von der in der Kühlflüssigkeitsleitung 14 mittels der Pumpe 11 in Umlauf gehaltenen Kühlflüssigkeit aufgenommen. Die Wärmeabgabe des Kühlsystem 10 an die Umgebung erfolgt in dem als Wärmetauscher 13 ausgebildeten Gegengewicht 5. Hierzu sind im Gegengewicht 5 Räume 15, 20, 30 vorgesehen, die von der Kühlflüssigkeit durchströmt werden. Aufgrund der großen Oberfläche des Gegengewichts 5 erfolgt die Wärmeabgabe von der Kühlflüssigkeit an die Umgebung mittels Konvektion. Die in Form von Wärme anfallende Verlustenergie des Antriebssystems wird hierbei vom Gegengewicht 5 aufgenommen und an die Umgebung abgegeben.

## Patentansprüche

1. Gabelstapler mit einem an einem Rahmen (2) angeordneten Gegengewicht (5) und mindestens einem eine Flüssigkeitskühlung aufweisenden Antriebssystem, wobei eine Kühlflüssigkeit die Verlustenergie des Antriebssystems aufnimmt und einem Wärmetauscher zuführt, **dadurch gekennzeichnet**, daß der Wärmetauscher (13) in das Gegengewicht (5) integriert ist.

2. Gabelstapler nach Anspruch 1, dadurch gekennzeichnet, daß das Gegengewicht (5) als Wärmetauscher (13) ausgebildet ist.

3. Gabelstapler nach Anspruch 1 oder 2, dadurch gekennzeichnet, daß das Gegengewicht (5) mindestens einen von der Kühlflüssigkeit durchströmten Hohlraum (30) aufweist.

4. Gabelstapler nach Anspruch 3, dadurch gekennzeichnet, daß der Hohlraum (30) als ein von der Kühlflüssigkeit durchströmtes Rohrsystem ausgebildet ist.

5. Gabelstapler nach Anspruch 4, dadurch gekennzeichnet, daß das Rohrsystem als Rohrschlange (15) ausgebildet ist.

6. Gabelstapler nach Anspruch 1 oder 2, dadurch gekennzeichnet, daß im Gegengewicht (5) ein zur Oberfläche des Gegengewichts geöffneter Raum (20) vorgesehen ist, der mittels einer Platte (21) verschließbar ist.

7. Gabelstapler nach Anspruch 6, dadurch gekennzeichnet, daß an der Platte (21) eine Dichtung (23) und Anschlüsse (24; 25) zur Aufnahme einer Kühlflüssigkeitsleitung (14) vorgesehen sind.

8. Gabelstapler nach einem der vorangegangenen Ansprüche, wobei zur Umwälzung der Kühlflüssigkeit eine Pumpe (11) vorgesehen ist, dadurch gekennzeichnet, daß die Pumpe (11) im Gegengewicht (5) angeordnet ist.

9. Gabelstapler nach einem der vorangegangenen Ansprüche, dadurch gekennzeichnet, daß ein Befüllungs- und Entlüftungssystem (16) im Gegengewicht angeorndet ist.

10. Gabelstapler nach Anspruch 9, dadurch gekennzeichnet, daß das Befüllungs- und Entlüftungssystem (16) als Expansionsbehälter (17) mit einer mittels eines Verschlußstopfens (18) verschließbaren Öffnung ausgebildet ist.

11. Gabelstapler nach Anspruch 10, dadurch gekennzeichnet, daß im Expansionsbehälter (17) ein Sensor zur Erfassung der Kühlflüssigkeitsmenge vorgesehen ist.

12. Gabelstapler nach einem der vorangegangenen Ansprüche, dadurch gekennzeichnet, daß als Kühlflüssigkeit das Druckmittel der hydraulischen Anlage vorgesehen ist.

13. Gabelstapler nach Anspruch 12, dadurch gekennzeichnet, daß die Hydraulikpumpe der hydraulischen Anlage, insbesondere die Lenkungspumpe als Pumpe (11) zur Umwälzung des als Kühlflüssigkeit verwendeten Druckmittels ausgebildet ist.

14. Gabelstapler nach einem der vorangegangenen Ansprüche, dadurch gekennzeichnet, daß als Antriebssystem ein elektrisches Antriebssystem vorgesehen ist.

15. Gabelstapler nach Anspruch 14, dadurch gekennzeichnet, daß zur Speisung des elektrischen Antriebssystems eine Batterie vorgesehen ist.

16. Gabelstapler nach Anspruch 14 oder 15, dadurch gekennzeichnet, daß das elektrische Antriebssystem mindestens einen Gleichstrommotor und ein Leistungsstellglied aufweist.

17. Gabelstapler nach Anspruch 14 oder 15, dadurch gekennzeichnet, daß das elektrische Antriebssystem mindestens einen Drehstrommotor und einen Umrichter aufweist.

18. Verfahren zur Herstellung eines in einem Gegengewicht eines eine Flüssigkeitskühlung aufweisenden Gabelstaplers integrierten Wärmetauschers, dadurch gekennzeichnet, daß das Gegengewicht durch Gießen von flüssigen Metall in eine Gießform hergestellt wird und während des Gießens im Gegengewicht mindestens ein Raum für die Wärmetauscherfunktion erzeugt wird.

19. Verfahren nach Anspruch 18, dadurch gekennzeichnet, daß der Raum durch Einlegen eines Kerns in die Gießform des Gegengewichts erzeugt wird.

20. Verfahren nach Anspruch 19, dadurch gekennzeichnet, daß als Kern ein Rohrsystem verwendet wird.

21. Verfahren nach Anspruch 19, dadurch gekennzeichnet, daß als Kern ein verlorener Kern verwendet wird.
